# EUROPEAN PATENT APPLICATION

(11) **EP 1 580 690 A2**
(43) Date of publication of application: **28.09.2005**
(21) Application number: 05006607.5
(22) Date of filing: 24.03.2005
(51) Int. Cl.: G06T 5/00, G06T 5/20

(54) **Image information correction apparatus, correction method, correction program, and image input device**

(30) Priority: 26.03.2004 JP 2004093069
(71) Applicant: Pioneer Corporation, Tokyo (JP)
(72) Inventor: Kanda, Masao c/o Oomori Koujou, Oota-ku Tokyo 143-8564 (JP)
(74) Representative: Popp, Eugen

(57) **Abstract**

An image information correction apparatus 10 is provided which corrects images by effectively removing long-cycle or sudden noise which occurs pixel by pixel. The apparatus includes: an abnormality determination processing section 12 for receiving pixel information sensed by a solid-state image pickup device 11 to be compared between pixel information to be corrected and its surrounding pixel information, thereby determining whether the pixel information to be corrected is abnormal; a normality determination processing section 13 for comparing pieces of surrounding pixel information of the pixel information to be corrected, thereby determining whether the surrounding pixel information is normal; and an interpolation processing section 14 for interpolating the pixel information to be corrected in accordance with an abnormality determination output from the abnormality determination processing section and a normality determination output from the normality determination processing section.

## Description

### BACKGROUND OF THE INVENTION

The present invention relates to an apparatus, a method, and a program for correcting image information, and an image input device.

Solid-state image pickup devices such as CCD or CMOS sensors have been employed in an image input device for use with various products such as digital cameras or image scanners. These image pickup devices are key components to produce electronic image information. The solid-state image pickup device includes a plurality of pixels to output sensed information on a pixel-by-pixel basis (hereinafter the information detected pixel by pixel is referred to as "pixel information"). In some cases, the pixel information contains noise. To remove the noise, a white level correction (correction for variations in sensitivity) or a black level correction (correction for dark noise) is generally made to the output from the solid-state image pickup device.

Fig. 1 is an explanatory view showing a conventional technique disclosed in Japanese Patent Application Laid-Open No. Hei 8-237480, showing a correction apparatus for making a black level correction to the output from a CCD. The conventional correction apparatus includes a correction data memory 2 in which pre-stored is correction data for correcting the black level of a CCD 1. The apparatus subtracts the correction data from an output of the CCD 1, thereby making a correction to the output level. The noise to which a black level correction is made is caused by dark current in the CCD 1, and thus varies in level depending on the temperature and the accumulation time of the CCD 1. According to the conventional technique, provided are a temperature sensing section 4 for receiving outputs from a temperature sensor 3 which measures the temperature of the CCD 1, and an accumulation time setting section 5 for setting the accumulation time of the CCD 1. In this arrangement, outputs from the correction data memory 2 as well as from the temperature sensing section 4 and the accumulation time setting section 5 are converted from digital to analog. Based on the resulting outputs, an amount of correction corresponding to the temperature and the accumulation time of the CCD 1 is created at a multiplier 6 and then subtracted from the output of the CCD 1, thereby providing control to the amount of correction.

The conventional technique allows correction data to be pre-stored, thereby eliminating the need of an operation and a facility for acquiring correction data every time an image is captured. This in turn allows the time required for capturing images to be shortened as well as proper corrections to be always made even in the presence of variations in temperature or service condition.

According to such a conventional technique, it is possible to make a correction to pixel information of a solid-state image pickup device if correction data can be prepared pixel by pixel in advance. However, this holds true only when the solid-state image pickup device outputs noise in a fixed pattern. That is, for noise which has a very long cycle or suddenly appears in a given pixel, correction data cannot be prepared and the conventional technique can be thus applied in vain.

On the other hand, when a still image is captured in a rather long exposure time, there is a higher possibility of a sudden noise being added to the pixel information produced during the exposure time. Nevertheless, a solid-state image pickup device being used as a two-dimensional sensor would cause pixel-by-pixel noise to appear only as a point. However, for scanning by a linear sensor of an array of pixels provided in a solid-state image pickup device, a noise may occur for a given time in one pixel while an image is being captured. This may cause a transverse line to appear in the direction of scanning, resulting in an easily noticeable detect in the output image.

This is the case not only with the linear sensor but also with the two-dimensional sensor. In particular, a generally dark output image would contain a low-level but noticeable noise, which makes it impossible to provide a good-quality output image.

In this context, a correction method is conceivable which allows noise-bearing pixel information to be extracted as abnormal pixel information with respect to surrounding pixel information and then interpolated using the surrounding pixel information. However, in an attempt to extract abnormal pixel information by comparing it with surrounding pixel information, the pixels to be used for the comparison with the abnormal pixel may contain noise thereby yielding an improper result of comparison. It is thus not always possible to properly interpolate the abnormal pixel information in a simple manner.

### SUMMARY OF THE INVENTION

The present invention was developed to address these problems in one aspect. It is therefore an object of the present invention to provide an apparatus for correcting image information which can correct images by effectively removing long-cycle or sudden noise occurring pixel by pixel, as well as a method, and a program for correcting image information. It is another object of the invention to provide an apparatus for correcting image information which can properly interpolate abnormal pixel information using surrounding pixels as well as a method, and a program for correcting image information. It is still another object of the invention to provide an image input device which incorporates the image information correction apparatus.

To achieve these objects, the present invention includes the features at least according to each of the following independent claims.

According to a first aspect of the present invention, an image information correction apparatus is one for correcting image information sensed by a solid-state image pickup device which includes a plurality of pixels. The image information correction apparatus comprises abnormality determination processing means for receiving pixel information sensed by the solid-state image pickup device to be compared between pixel information to be corrected and its surrounding pixel information, thereby determining whether the pixel information to be corrected is abnormal, normality determination processing means for receiving the pixel information sensed by the solid-state image pickup device to be compared between pieces of surrounding pixel information of the pixel information to be corrected, thereby determining whether the pieces of surrounding pixel information are normal, and interpolation processing means for interpolating the pixel information to be corrected in accordance with an abnormality determination output from the abnormality determination processing means and a normality determination output from the normality determination processing means.

According to a second aspect of the present invention, an image information correction method is one for correcting image information sensed by a solid-state image pickup device which includes a plurality of pixels. The image information correction method comprises an abnormality determination processing step of comparing pixel information sensed by the solid-state image pickup device between pixel information to be corrected and its surrounding pixel information, thereby determining whether the pixel information to be corrected is abnormal, a normality determination processing step of comparing the pixel information sensed by the solid-state image pickup device between pieces of surrounding pixel information of the pixel information to be corrected, thereby determining whether the pieces of surrounding pixel information are normal, and an interpolation processing step of interpolating the pixel information to be corrected in accordance with an abnormality determination output from the abnormality determination processing step and a normality determination output from the normality determination processing step.

According to a third aspect of the present invention, a computer-readable medium contains an image information correction program for allowing a computer to realize a function of correcting image information sensed by a solid-state image pickup device which includes a plurality of pixels. The image information correction program allows the computer to be functioned as abnormality determination processing means for comparing pixel information sensed by the solid-state image pickup device between pixel information to be corrected and its surrounding pixel information, thereby determining whether the pixel information to be corrected is abnormal, normality determination processing means for comparing the pixel information sensed by the solid-state image pickup device between pieces of surrounding pixel information of the pixel information to be corrected, thereby determining whether the pieces of surrounding pixel information are normal, and interpolation processing means for interpolating the pixel information to be corrected in accordance with an abnormality determination output from the abnormality determination processing means and a normality determination output from the normality determination processing means.

### BRIEF DESCRIPTION OF THE DRAWINGS

These and other obj ects and advantages of the present invention will become clear from the following description with reference to the accompanying drawings, wherein:

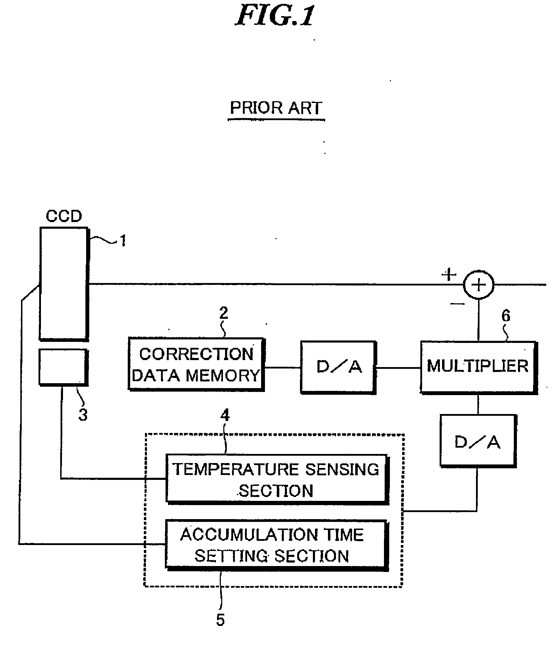

Fig. 1 is an explanatory view showing a conventional technique;
Fig. 2 is an explanatory view showing the principal configuration of an image information correction apparatus according to an embodiment of the present invention;
Fig. 3 is an explanatory view showing the effects of an image information correction apparatus according to the embodiment of the present invention;
Fig. 4 is an explanatory view showing an abnormality determination processing section in an image information correction apparatus according to the embodiment;
Fig. 5 is an explanatory view showing a normality determination processing section in an image information correction apparatus according to the embodiment;
Fig. 6 is an explanatory view showing an interpolation processing section in an image information correction apparatus according to the embodiment;
Fig. 7 is an explanatory view showing an exemplary application according to the embodiment of the present invention;
Fig. 8 is an explanatory view showing another embodiment of the present invention; and
Fig. 9 is an explanatory view showing still another embodiment of the present invention.

### DETAILED DESCRIPTION OF THE PREFERRED EMBODIMENTS

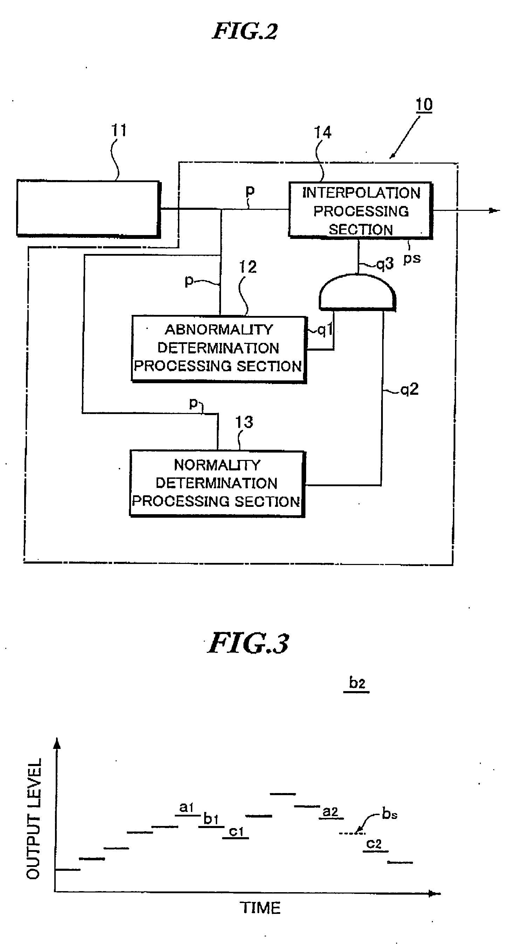

Now, the present invention will be described below in more detail with reference to the accompanying drawings in accordance with the embodiments. Fig. 2 is an explanatory view showing the principal configuration of an image information correction apparatus according to an embodiment of the present invention. An image information correction apparatus 10 is adapted to correct image information sensed by a solid-state image pickup device 11 (such as a CCD) which includes a plurality of pixels. The apparatus 10 includes an abnormality determination processing section (abnormality determination processing means) 12 which receives pixel information sensed by the solid-state image pickup device 11 to be compared between pixel information to be corrected and its surrounding pixel information, thereby determining whether the pixel information to be corrected is abnormal. The apparatus 10 also includes a normality determination processing section (normality determination processing means) 13 which receives pixel information sensed by the solid-state image pickup device 11 to be compared between pieces of surrounding pixel information of the pixel information to be corrected, thereby determining whether the surrounding pixel information is normal. The apparatus 10 further includes an interpolation processing section (interpolation processing means) 14 for interpolating the pixel information to be corrected in accordance with an abnormality determination output from the abnormality determination processing section 12 and a normality determination output from the normality determination processing section 13.

In the image information correction apparatus 10 according to such an embodiment or a correction method using the image information correction apparatus 10, pixel information "p" sensed by the solid-state image pickup device 11 is sequentially supplied pixel by pixel to the abnormality determination processing section 12, the normality determination processing section 13, and the interpolation processing section 14. Then, the abnormality determination processing section 12 sequentially determines whether all pieces of pixel information "p", received in the order of pixel array and serving as pixel information to be corrected, are abnormal information (i.e., noise-bearing information). If true, an abnormality determination output signal q1 is generated for output. The abnormality determination processing section 12 thus determines whether the pixel information "p" to be corrected is abnormal. Meanwhile, the normality determination processing section 13 sequentially determines whether pieces of surrounding pixel information of the pixel information to be corrected are normal information (i.e., noise-free information). If true, a normality determination output signal q2 is generated for output. When the abnormality determination processing section 12 outputs the abnormality determination output signal q1 and the normality determination processing section 13 outputs the normality determination output signal q2, an interpolation control signal q3 is outputted, so that the interpolation processing section 14 interpolates the pixel information to be corrected for delivery of interpolated pixel information ps.

Fig. 3 is an explanatory view showing the effects of the image information correction apparatus 10 according to an embodiment of the present invention, in which the output level of pieces of pixel information sequentially delivered from the solid-state image pickup device 11 is shown in time sequence.

Taking the resolution of an optical system in an image input device or the like into accounts, the image information correction apparatus 10 according to an embodiment of the present invention takes advantage of a fact that pixel information which is delivered by the solid-state image pickup device 11 after having captured an image has no big difference in output level between surrounding pixels so long as the pixels contain no noise on a pixel-by-pixel basis.

Referring to Fig. 3, consider the output level of three pixels adjacent to each other which serve as the surrounding pixels. For example, a comparison between pixel information a1, b1, and c1 shows that these pieces of pixel information have small differences in output level and can be determined to be noise-free or normal information. On the other hand, a comparison between pixel information a2, b2, and c2 shows that the pixel information b2 is significantly different in output level from the other pieces of pixel information and thus can be determined to be noise-bearing or abnormal information.

In the foregoing, a comparison is made between three adjacent pixels. However, no proper determination would be made if noise-bearing pixels were compared with each other. Since the pixel information a2, b2, and c2 provides a small difference in output level between a2 and c2, these pieces of pixel information can be determined to be normal information. Thus, the pixel information b2 can be properly determined to be abnormal when compared with a2 or c2. Accordingly, only when a proper determination is made in this manner, the pixel information b2 is interpolated and the resulting interpolated pixel information bs is delivered in place of the pixel information b2.

The image information correction apparatus 10 according to such an embodiment can correct images by effectively removing long-cycle or sudden noise occurring pixel by pixel. Furthermore, pieces of pixel information used for comparison and interpolation are determined to be normal before abnormal pixel information is interpolated using the surrounding pixels. This allows for making a proper determination of the abnormal pixel information and accurately interpolating the abnormal pixel information.

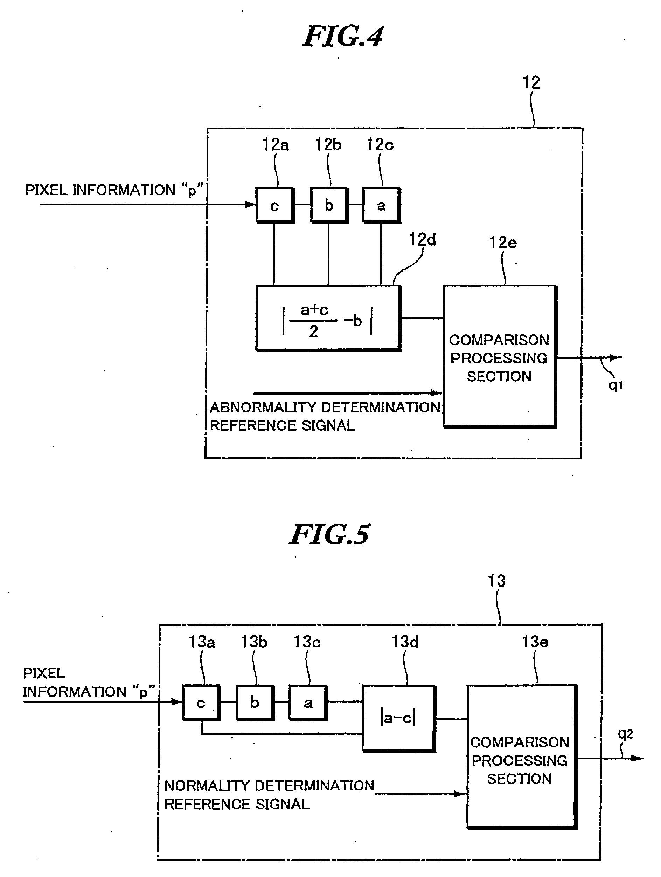

Fig. 4 is an explanatory view showing the aforementioned abnormality determination processing section 12. The abnormality determination processing section 12 determines the difference in output level between pixel information to be corrected and pixel information of its surrounding pixels and then compares the difference in output level with an abnormality determination reference signal, thereby making an abnormality determination. Shown in Fig. 4 is an example which employs three adjacent pixels as surrounding pixels. The abnormality determination processing section 12 includes a first memory section 12a, a second memory section 12b, a third memory section 12c, a computation processing section 12d, and a comparison processing section 12e.

That is, pieces of pixel information delivered from the solid-state image pickup device 11 are sequentially supplied in the order of pixel array to the first memory section 12a, the second memory section 12b, and the third memory section 12c. The pixel information stored in the first memory section 12a, the second memory section 12b, and the third memory section 12c is then computed at the computation processing section 12d. Then, the comparison processing section 12e performs a comparison between the computation result provided by the computation processing section 12d and the abnormality determination reference signal.

More specifically, suppose that pixel information "c," "b," and "a" is now stored in the first memory section 12a, the second memory section 12b, and the third memory section 12c, respectively. In this case, the computation processing section 12d computes |{(a + c)/2} - b| and then outputs the computation result to the comparison processing section 12e. Here, the pixel information "b" stored in the second memory section 12b is to be corrected. The difference (i.e., the absolute value of the difference) between the pixel information "b" and the average value of pieces of pixel information before and after it, i.e., (a + c)/2 is determined and then compared with the abnormality determination reference signal at the comparison processing section 12e . The comparison processing section 12e then provides an abnormality determination output if the computation result determined at the computation processing section 12d is greater than the abnormality determination reference signal. That is, if the output level of the pixel information "b" to be corrected is more separated from those of the pixel information before and after it than a reference, the pixel information "b" is determined to be abnormal.

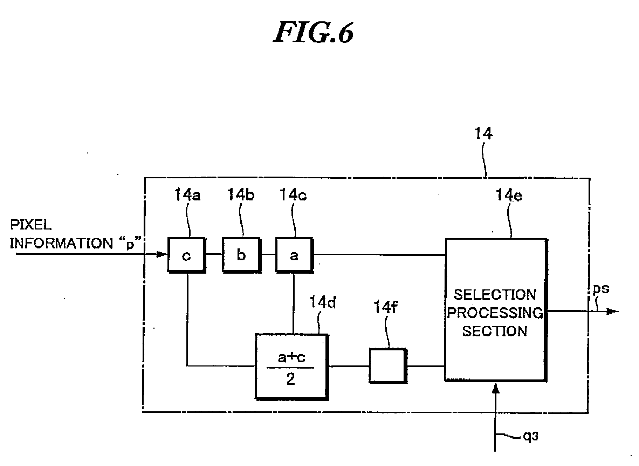

Fig. 5 is an explanatory view showing the aforementioned normality determination processing section 13. The normality determination processing section 13 determines the mutual differences in output level of pixel information between surrounding pixels of a pixel to be corrected and then compares the resulting differences in output level with a normality determination reference signal, thereby making a normality determination. Here, the normality determination processing section 13 includes a first memory section 13a, a second memory section 13b, a third memory section 13c, a computation processing section 13d, and a comparison processing section 13e.

That is, pieces of pixel information delivered from the solid-state image pickup device 11 are sequentially supplied in the order of pixel array to the first memory section 13a, the second memory section 13b, and the third memory section 13c. The pixel information stored in the first memory section 13a and the third memory section 13c is then computed at the computation processing section 13d. Then, the comparison processing section 13e performs a comparison between the computation result provided by the computation processing section 13d and the normality determination reference signal.

More specifically, suppose that pixel information "c," "b," and "a" is now stored in the first memory section 13a, the second memory section 13b, and the third memory section 13c, respectively. In this case, the computation processing section 13d computes |a - c| and then outputs the computation result to the comparison processing section 13e. Here, the pixel information "b" stored in the second memory section 13b is to be corrected. The difference (the absolute value of the difference) of pixel information between pixels before and after it is determined and then compared with the normality determination reference signal at the comparison processing section 13e. The comparison processing section 13e then provides a normality determination output if the computation result determined at the computation processing section 13d is less than the normality determination reference signal. That is, if the difference in output level between the pixels before and after the pixel information "b" to be corrected is not separated more than a reference, the pixel information "a" and "c" of the pixels before and after it is determined to be normal.

The aforementioned first memory sections 12a and 13a, the second memory sections 12b and 13b, and the third memory sections 12c and 13c may be separately implemented in their respective processing sections as described above, or alternatively the three memory sections may be shared among the processing sections.

Additionally, the aforementioned abnormality determination reference signal and/or normality determination reference signal may be made variably settable.

This allows for varying the level of the abnormality determination reference signal depending on the brightness or definition of an image to be corrected, thereby interpolating pixels in a further improved manner. For example, since noises are more likely noticeable in a darker image, the level of the abnormality determination reference signal for a darker image may be reduced to provide a higher sensitivity to the abnormality determination. A lower level of the abnormality determination reference signal may cause a higher probability of erroneous detection of abnormalities. On the other hand, there is worry that although the probability of extracting abnormal pixels is increased, the definition of images may be impaired because normal pixels could be more likely determined to be abnormal as well. In this context, to place a higher priority to the fineness of images, the abnormality determination reference signal is set to a slightly higher level. In contrast to this, to place a higher priority to the reduction of noise, the abnormality determination reference signal is set to a slightly lower level. When an image of interest has a lower definition, the normality determination reference signal is set to a slightly lower level because there is no big difference in output level between the surrounding pixels. On the contrary, for higher definition images, the normality determination reference signal is set to a slightly higher level because there is a significant difference in output level between the surrounding pixels.

Fig. 6 is an explanatory view showing the aforementioned interpolation processing section 14. The interpolation processing section 14 interpolates the pixel information to be corrected, which has been determined to be abnormal, using its surrounding pixel information. In the illustrated example, the average value of the surrounding pixel information "a" and "c," i.e., (a+c) / 2 is outputted in place of the pixel information "b".

That is, the interpolation processing section 14 includes a first memory section 14a, a second memory section 14b, a third memory section 14c, a computation processing section 14d, a selection processing section 14e, and a delay processing section 14f. Pieces of pixel information delivered from the solid-state image pickup device 11 are sequentially supplied in the order of pixel array to the first memory section 14a, the second memory section 14b, and the third memory section 14c. The pixel information stored in the first memory section 14a and the third memory section 14c is then computed at the computation processing section 14d. Then, the computation result provided by the computation processing section 14d is delayed at the delay processing section 14f and then supplied to the selection processing section 14e in sync with the pixel information "b" stored in the second memory section 14b.

Then, an ANDed signal of the abnormality determination output signal q1 from the abnormality determination processing section 12 and the normality determination output signal q2 from the normality determination processing section 13 is supplied to the selection processing section 14e as the interpolation control signal q3. When having received the interpolation control signal q3, the selection processing section 14e outputs the interpolated pixel information ps which has been interpolated by replacing the pixel information "b" determined to be abnormal with the computation result (a + b) /2.

The interpolation processing section 14 is not limited to the example shown in Fig. 6 but may also employ an interpolation technique such as a pre-position interpolation (for replacement for the pixel information "a" of Fig. 6) or a post-position interpolation (for replacement for the pixel information "c" of Fig. 6) . On the other hand, when the solid-state image pickupdevice 11 is a two-dimensional sensor, the pixel information to be corrected can be interpolated, e.g., by two-dimensionally using its surrounding pixels to determine the average value of the pixels. In this case, it is necessary to determine in the aforementioned manner whether the pixel information of the surrounding pixels is normal.

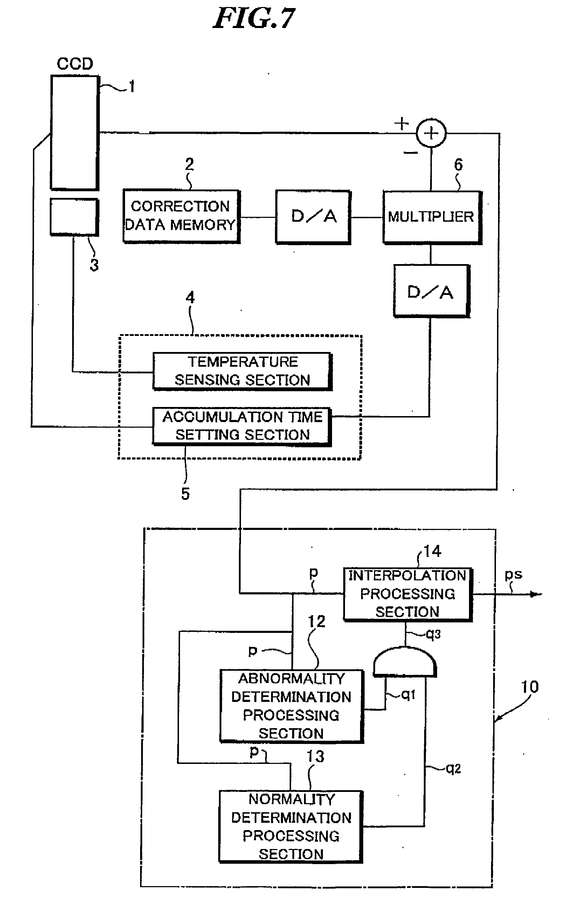

Fig. 7 is an explanatory view showing an embodiment in which the aforementioned image information correction apparatus 10 is incorporated into a conventional correction apparatus. The conventional technique is as described above. In this embodiment, for connecting between the apparatuses, the conventional correction apparatus precedes the image information correction apparatus 10 according to an embodiment of the present invention. However, to the contrary, the image information correction apparatus 10 according to an embodiment of the present invention may acquire the output from the CCD to add controlled correction data to the output from the image information correction apparatus 10.

According to this embodiment, the conventional correction apparatus makes a black level correction to stable output noises, while the image information correction apparatus 10 makes an image correction to sudden noises or very-long-cycle noises. This arrangement makes it possible to effectively remove various types of noises.

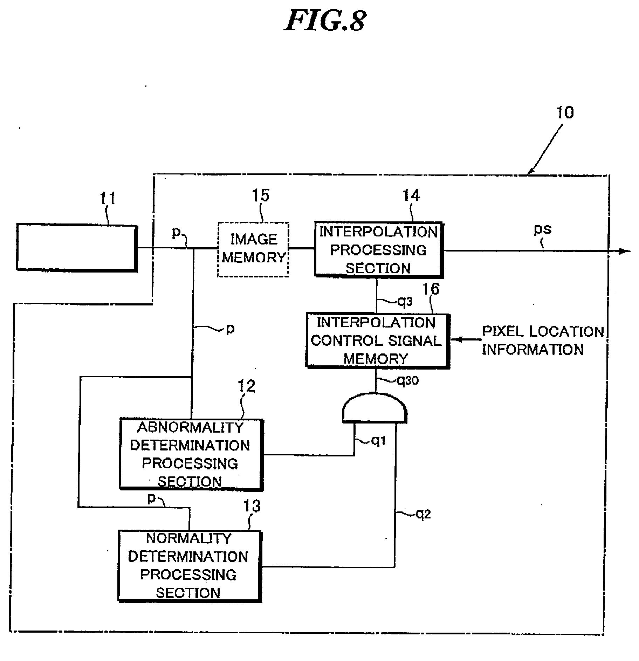

Fig. 8 is a view showing another embodiment of the present invention (in which like reference symbols indicate the same components as described above, and some of the components will not be explained repeatedly). In this embodiment, when a particular pixel is determined to be abnormal several times, its pixel information is determined to be definitely abnormal and then interpolated. In general, an abnormal pixel may often show its abnormality through a plurality of times of successive exposures. A linear sensor would successively output a plurality of line outputs during scanning, in the case of which successive abnormal outputs from a particular pixel would result in an image having a linear defect.

In this embodiment, the aforementioned abnormality determination and normality determination are to be made while the pixel information sensed by the solid-state image pickup device 11 is stored in an image memory 15. Subsequently, an ANDed signal q30 of the abnormality determination output signal q1 from the abnormality determination processing section 12 and the normality determination output signal q2 from the normality determination processing section 13 is associated with pixel location information and stored in an interpolation control signal memory 16. Thus, data concerning which pixel and how many times the pixel has been determined to be abnormal is stored. When the pixel is determined to be abnormal a predetermined number of times, the interpolation control signal q3 is delivered to the interpolation processing section 14. The pixel which has been determined to be abnormal several times is interpolated in the image stored in the image memory 15, thereby making it possible to provide interpolations with reliability.

In the examples shown in Figs. 4 to 6, to extract surrounding pixels of a pixel to be corrected, pixels before and after the pixel to be corrected are extracted using the three memory sections (the first, second, and third memory sections); however, the invention is not limited thereto. It is also possible to extract a larger number of pixels to make the aforementioned abnormality and normality determinations. This makes it possible to construct a system which is effective when consecutive pixels are both abnormal.

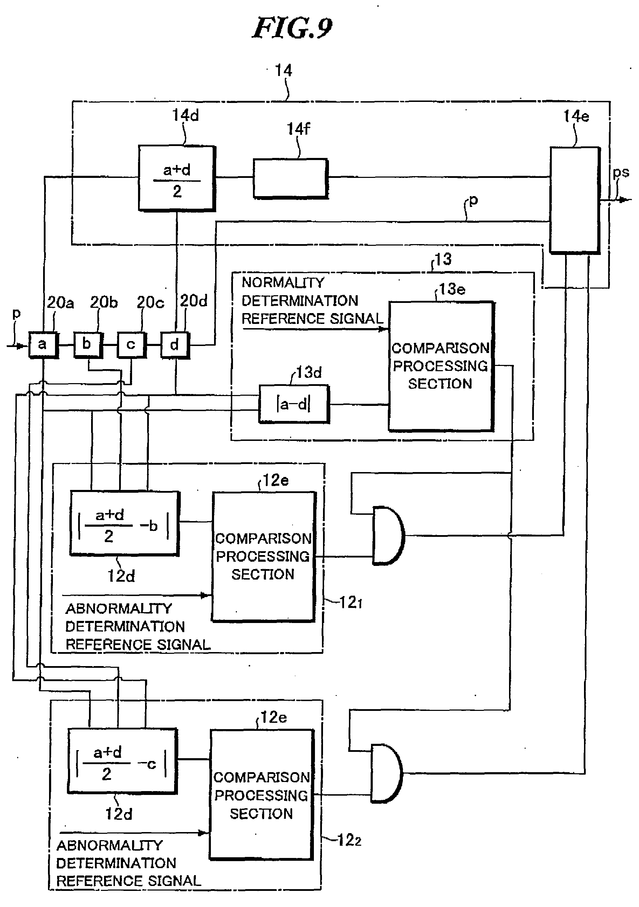

Fig. 9 shows another embodiment which includes four memory sections (a first memory section 20a, a second memory section 20b, a third memory section 20c, and a fourth memory section 20d) which are shared among the abnormality determination processing sections 12₁ and 12₂, the normality determination processing section 13, and the interpolation processing section 14. According to this embodiment, the abnormality determination processing section 12₁ employs the pixel information "b" stored in the second memory section 20baspixel information tobecorrected, and then makes an abnormality determination thereto based on the pixel information "a" stored in the first memory section 20a and the pixel information "d" stored in the fourth memory section 20d. On the other hand, the abnormality determination processing section 12₂ employs the pixel information "c" stored in the third memory section 20c as pixel information to be corrected, and then makes an abnormality determination thereto based on the pixel information "a" stored in the first memory section 20a and the pixel information "d" stored in the fourth memory section 20d. Furthermore, the normality determination processing section 13 makes a normality determination to the pixel information "a" stored in the first memory section 20a and the pixel information "d" stored in the fourth memory section 20d, on which the abnormality determination was based.

When the pixel information "b" and "c" to be corrected is determined to be abnormal and its surrounding pixel information "a" and "d" are determined to be normal, the interpolation processing section 14 performs interpolating processing to replace the pixel information "b" and "c" with the average value (a + d)/2 of the pixel information "a" and "d".

Such an embodiment makes it possible to effectively correct abnormal pixel information even when two successive pixels are both abnormal. Naturally, this embodiment makes it also possible to make an effective correction not only when two successive pixels are abnormal but also when only one pixel is abnormal.

The image information correction apparatus 10 according to each of the embodiments described above may be installed on the output side of a solid-state image pickup device in an image input device to acquire input image information via the interpolation processing section 14. This arrangement can thus realize an image input device which incorporates an image information correction apparatus. It is also possible to implement the function of each section according to the aforementioned embodiments using a computer program and thereby realize on the computer the function of correcting image information detected by a solid-state image pickup device which includes a plurality of pixels. This arrangement makes it possible to perform software processing on and thereby make an image correction to image information which has been once captured by the personal computer or the like.

As can be seen clearly by now, the aforementioned apparatus, method, and program for correcting image information, and an image input device which incorporates the image information correction apparatus make it possible to correct images by effectively removing long-cycle noise or sudden noise occurring pixel by pixel. It is also possible to properly correct abnormal pixel information using surrounding pixels.

Furthermore, for abnormality or normality determinations of pixel information, the level of a reference signal can be variably adjusted to perform appropriate determination processing on a captured image depending on its brightness, definition or the like, thereby effectively correcting for defects in the image.

Still furthermore, to make a correction, neither a preparatory operation nor an additional facility is required before an image is captured. This makes it thus possible to shorten the time for acquiring an image as well as reduce the entire system in size.

## Claims

1. An image information correction apparatus (10) for correcting image information sensed by a solid-state image pickup device (11) which comprises a plurality of pixels, **characterized by**:
abnormality determination processing means (12) for receiving pixel information sensed by the solid-state image pickup device to be compared between pixel information to be corrected and its surrounding pixel information, thereby determining whether the pixel information to be corrected is abnormal;
normality determination processing means (13) for receiving the pixel information sensed by the solid-state image pickup device to be compared between pieces of surrounding pixel information of the pixel information to be corrected, thereby determining whether the pieces of surrounding pixel information are normal; and
interpolation processing means (14) for interpolating the pixel information to be corrected in accordance with an abnormality determination output from the abnormality determination processing means and a normality determination output from the normality determination processing means.

2. The image information correction apparatus according to claim 1, **characterized in that**
the abnormality determination processing means (12) determines a difference in output level between the pixel information to be corrected and the surrounding pixel information to compare the difference in output level with an abnormality determination reference signal, thereby making an abnormality determination.

3. The image information correction apparatus according to claim 2, **characterized in that**
the abnormality determination reference signal is made variably settable.

4. The image information correction apparatus according to any one of claims 1 to 3, **characterized in that**
the normality determination processing means (13) determines differences in output level between the pieces of surrounding pixel information to compare the differences in output level with a normality determination reference signal, thereby making a normality determination.

5. The image information correction apparatus according to claim 4, **characterized in that**
the normality determination reference signal is made variably settable.

6. The image information correction apparatus according to any one of claims 1 to 5, further **characterized by**:
storage means (15) for storing the image information sensed by the solid-state image pickup device, the image information stored in the storage means being supplied to the interpolation processing means on a pixel information by pixel information basis; and
interpolation control means (16) for allowing the interpolation processing means to perform interpolation processing when the abnormality determination processing means has delivered abnormality determination outputs several times.

7. An image information correction method for correcting image information sensed by a solid-state image pickup device which comprises a plurality of pixels, **characterized by**:
an abnormality determination processing step of comparing pixel information sensed by the solid-state image pickup device between pixel information to be corrected and its surrounding pixel information, thereby determining whether the pixel information to be corrected is abnormal;
a normality determination processing step of comparing the pixel information sensed by the solid-state image pickup device between pieces of surrounding pixel information of the pixel information to be corrected, thereby determining whether the pieces of surrounding pixel information are normal; and
an interpolation processing step of interpolating the pixel information to be corrected in accordance with an abnormality determination output from the abnormality determination processing step and a normality determination output from the normality determination processing step.

8. A computer-readable medium containing an image information correction program for allowing a computer to realize a function of correcting image information sensed by a solid-state image pickup device (11) which comprises a plurality of pixels, the image information correction program allowing the computer to be functioned as:
abnormality determination processing means (12) for comparing pixel information sensed by the solid-state image pickup device between pixel information to be corrected and its surrounding pixel information, thereby determining whether the pixel information to be corrected is abnormal;
normality determination processing means (13) for comparing the pixel information sensed by the solid-state image pickup device between pieces of surrounding pixel information of the pixel information to be corrected, thereby determining whether the pieces of surrounding pixel information are normal; and
interpolation processing means (14) for interpolating the pixel information to be corrected in accordance with an abnormality determination output from the abnormality determination processing means and a normality determination output from the normality determination processing means.

9. An image input device comprising the image information correction apparatus according to any one of claims 1 to 6, wherein input image information is acquired via the interpolation processing means.
